**Europäisches Patentamt**

**European Patent Office**

**Office européen des brevets**

(19)

(11) Veröffentlichungsnummer: **0 149 990**
**B1**

(12) # EUROPÄISCHE PATENTSCHRIFT

(45) Veröffentlichungstag der Patentschrift:
**13.07.88**

(51) Int. Cl.⁴: **F 23 G 7/10**

(21) Anmeldenummer: **84890194.8**

(22) Anmeldetag: **17.10.84**

(54) **Einrichtung zur Verfeuerung von Biomasse.**

(30) Priorität: **17.10.83 AT 3699/83**

(43) Veröffentlichungstag der Anmeldung:
**31.07.85 Patentblatt 85/31**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**WO - A - 80/02062**
**DE - A - 2 803 158**
**DE - B - 2 754 725**

(73) Patentinhaber: **Berthiller, Franz,**
**A-3474 Winkl 22 Niederösterreich (AT)**
Patentinhaber: **KESSEL-LOOS-KG, Haldenweg 7,**
**A-5500 Bischofshofen Salzburg (AT)**

(72) Erfinder: **Berthiller, Franz,**
**A-3474 Winkl 22 Niederösterreich (AT)**

(74) Vertreter: **Krause, Ernst, Dipl.-Ing. et al, Dipl.- Ing.**
**Krause, Ernst Dipl. Ing. Casati, Wilhelm Patentanwälte**
**Amerlingstrasse 8, A-1061 Wien (AT)**

### Beschreibung

Die Erfindung betrifft eine Einrichtung zur Verfeuerung von Biomasse, z.B. Stroh, Weinreben u.dgl., in der die Biomasse über einen Schacht einem Brennraum zuführbar ist, der mit Primärluft versorgt ist und die Abgase des Brennraumes in den Schacht einführbar sind.

Die Verfeuerung von Biomasse brachte, insbesondere wenn es sich dabei um Stroh handelt, vor allem hinsichtlich des bis nun nicht beseitigbaren Schadstoffgehaltes in den Abgasen, Probleme. Jedoch auch die Verfeuerung des Strohs als solches ist insofern problematisch, als Stroh meist aus Transportgründen in Form von Ballen vorliegt und versucht wird, diese Ballen als Ganzes dem Feuerraum zuzuführen, was wieder Zufuhrprobleme mit sich bringt und einen kontinuierlichen Betrieb ausschliesst.

Durch die DE-A 2 803 158 wurde es bei einer Einrichtung der eingangs erwähnten Art bekannt, die aus dem Schacht, der dort als Zyklon ausgebildet ist, abgehenden heissen, mit Feuchtigkeit aus der Biomasse beladenen Gase einem Kamin zuzuführen. Für den weiteren Prozess sind diese Gase damit verloren, was den Wirkungsgrad ungünstig beeinflusst; darüberhinaus ist – sofern man nicht Filter einsetzt, die ebenfalls Kosten verursachen – mit Umweltbelastungen zu rechnen.

Der vorliegenden Erfindung liegt daher die Aufgabe zugrunde, eine Einrichtung zur Verfeuerung von Biomasse so auszugestalten, dass die Schadstoffmasse in den Abgasen wesentlich vermindert wird und der Verbrennungsvorgang als solches eine Verbesserung erfährt. Erreicht wird dieses Ziel dadurch, dass gemäss der Erfindung die Abgase des Brennraumes aus dem Schacht einer Nachbrennkammer zuführbar sind, wobei dieser Nachbrennkammer Luft aus einem Sichter zuführbar ist, der mit der mit Luft vermengten Biomasse beaufschlagbar ist und der an den zum Brennraum führenden Schacht angeschlossen ist und die Primärluft insbesondere in einem Luftvorwärmer erwärmt wird.

In einer Nachbrennkammer liegt dabei praktisch eine reine Gasfeuerung vor, wobei die Verbrennungsluft dieser Nachbrennkammer Luft ist, die zur Zuförderung der Biomasse zur erfindungsgemässen Einrichtung Verwendung fand und die solcherart weiter im Prozess verbleibt.

Wird ein Luftvorwärmer für die Primärluft eingesetzt, so gelingt eine weitere Ausnutzung der in den Abgasen vorhandenen Wärme, und die Primärluft gelangt im vorerhitzten Zustand zur Verbrennung.

In weiterer Ausgestaltung der erfindungsgemässen Einrichtung ist hierbei vorgesehen, dass die Abgase der Nachbrennkammer, gegebenenfalls nach Durchgang durch einen Sichter, dem Luftvorwärmer für die Primärluft des Brennraumes zuführbar sind.

In besonderer Ausgestaltung der erfindungsgemässen Einrichtung kann vorgesehen werden, dass der Luftvorwärmer für die Primärluft mit jenem für die Abfuhr der mit einem Teil des Abgases der Nachbrennkammer noch vermischten Festteile bestimmten Auslass des Sichters für die Abgase der Nachbrennkammer verbunden ist. Solcherart gelingt es, auch die in den Abgasen der Nachbrennkammer noch vorhandene Wärme der Festteile, zur Luftvorwärmung für die Primärluft zu verwenden.

Nach einer weiteren Ausgestaltung der Erfindung erscheint es vorteilhaft, wenn die im Luftvorwärmer anfallenden Feststoffe aus den Abgasen der Nachbrennkammer, der den Luftvorwärmer verlassenden Primärluft für den Brennraum, bevorzugt über ein in die Primärluftleitung eingebautes Dreiwegventil, eine Klappe od.dgl. zuführbar ist. Dabei dient die Primärluft als Transportmittel für die in den Abgasen des Verbrennungsprozesses etwa noch vorhandenen unverbrannten Stoffe, die solcherart erneut zur Verbrennung und damit zur Ausnutzung der in ihnen enthaltenen Wärme gelangen.

Besonders vorteilhaft ist es, wenn in Weiterbildung des Erfindungsgegenstandes zur Nutzung der in der, insbesondere flüssig aus dem Brennraum abgezogenen, Schlacke enthaltenen Wärme ein Wärmetauscher vorgesehen ist, der in den zum Brennraum führenden Weg der im Luftvorwärmer erhitzten Luft, bevorzugt in einem Teilstrom der im Luftvorwärmer erhitzten Luft, eingeschaltet ist.

Eine weitere Ausgestaltung der erfindungsgemässen Einrichtung kennzeichnet sich dadurch, dass die im Luftvorwärmer erhitzte Luft, insbesondere ein Teilstrom dieser Luft, über ein Regelorgan, z.B. ein Mehrwegventil, eine Klappe oder dgl. dem Brennraum und bzw. oder dem Abgas der Nachbrennkammer vor dem Sichter für diese Abgase zuführbar ist. Durch diese Massnahme ist mit besonders einfachen Mitteln eine günstige Beeinflussung des Verbrennungsvorganges möglich, bei der erhitzte Luft wahlweise dem Brennraum oder dem Abgas der Nachbrennkammer, gegebenenfalls auch beiden, zugeführt werden kann.

In weiterer Ausgestaltung der Erfindung kann vorgesehen sein, dass in die Nachbrennkammer, z.B. mittels einer Brause oder dgl., Wasser einführbar ist. Solcherart ist es möglich, Wasserdampf zu erzeugen, der eine Kühlung der Nachbrennkammer bewirkt.

Mündet gemäss einer weiteren Ausgestaltung der Erfindung ein Teilstrom der Luft aus dem Sichter für die Biomasse, in den zum Luftvorwärmer führenden Weg der Primärluft ein, so ist es möglich, einen weiteren Teil der Luft für die Feuerung der Biomasse zur Verbrennungseinrichtung im Prozess zu verwenden.

Eine kompakte Ausführungsform der erfindungsgemässen Einrichtung ist erzielbar, wenn, wie dies erfindungsgemäss vorgesehen sein kann, der Brennraum und die Nachbrennkammer konzentrisch zueinander in einem bevorzugt als Stehkessel ausgebildeten Kessel angeordnet sind und der Zufuhrschacht für die Biomasse den Brennraum konzentrisch umschliesst, wobei der Zufuhrschacht für die Biomasse von einem zwischen Brennraum und Nachbrennkammer befindlichen Ringraum konzentrisch zum Brennraum gebildet ist. Diese Ausgestaltung erlaubt es auch, aus dem Ringraum zwischen Brennraum und Nachbrennkammer Gas, das aus der Biomasse, die in diesen Ringraum gelangt, stammt, abzuführen und einer weiteren Verwertung, z.B. in einem Gasmotor oder dgl., zuzuführen. Selbstverständlich kann über eine zu diesem Zweck vorgesehene Abzugsleitung für die Gase auch Luft in umgekehrter Richtung dem Ringraum und damit der in diesem befindlichen Biomasse zugeführt werden.

Um die heissen Gase aus dem Brennraum möglichst intensiv der ankommenden Biomasse im Zufuhrschacht zuführen zu können, weist in weiterer Ausgestaltung der erfindungsgemässen Einrichtung die Wandung zwischen dem Brennraum und dem Zufuhrschacht für die Biomasse nach Art eines Rostes angeordnete, insbesondere Mann an Mann liegende Stäbe aus feuerfestem Material, z.B. aus Oxidkeramik, auf.

Eine besonders günstige Zufuhr der Abgase zur Nachbrennkammer unter Durchsetzung der ankommenden Biomasse ist erzielbar, wenn gemäss einer weiteren Ausgestaltung der erfindungsgemässen Einrichtung die Wandung zwischen dem Zufuhrschacht für die Biomasse und der Nachbrennkammer im oberen Bereich als aus Stäben gebildeter Korb ausgebildet ist.

Eine einfache Herstellungsmöglichkeit des Korbes ergibt sich, wenn zwei konzentrisch zueinander angeordnete Mäntel aus umfänglich voneinander beabstandeten Stäben vorgesehen sind und die Stäbe der beiden Mäntel fug auf voll angeordnet sind. Die Enden eines jeden Stabes können dabei an der Aussenseite bzw. der Innenseite zweier Tragringe fixiert sein. Die Stärke der Tragringe bestimmt dann den Durchtrittsspalt für die Gase.

Eine einfache Zufuhrmöglichkeit für die Biomasse in den Brennraum ergibt sich, wenn in besonderer Ausgestaltung der erfindungsgemässen Einrichtung der Zufuhrschacht für die Biomasse unten in Zylinderräume seitlich mündet, die sternförmig im Bereich des unteren Endes des Brennraumes angeordnet sind und in welchen Förderkolben bewegbar sind, wobei die Zylinderräume stirnseitig in den Brennraum münden. Bei dieser Ausgestaltung ist der Energiebedarf für das Zubringen der Biomasse zum Brennraum gering.

Zur Weiterführung der Biomasse kann in Weiterbildung der erfindungsgemässen Einrichtung, im Brennraum unterhalb der Einmündung der Zylinderräume, über welche die Biomasse dem Brennraum zuführbar ist, ein Düsenstock angeordnet sein, der mit Primärluft aus dem Luftvorwärmer beaufschlagbar ist, die insbesondere mittels eines Gebläses und regelbar dem Düsenstock zuführbar ist. Hiebei wird die Primärluft gleichzeitig als Fördermittel für die Biomasse im Brennraum eingesetzt, wobei die hiefür verwendete Luftmenge regelbar sein kann und vorerwärmte Luft Verwendung finden kann.

Es ist jedoch auch möglich, zur Weiterförderung der über die Kolben/Zylinderaggregate dem Brennraum zugeförderten Biomasse einen Schneckenförderer im Bereich der Mündung der Zylinderräume, über welche die Biomasse zuführbar ist, anzuordnen, wobei zur Zufuhr von Primärluft in den Brennraum eine, insbesondere mit dem Schneckenförderer verbundene, mit diesem umlaufende Lanze vorgesehen ist, deren Ausblaseöffnungen bevorzugt oberhalb der Mündung eines den Schneckenförderer umschliessenden Förderschachtes angeordnet sind.

Läuft die Lanze hiebei um, so wird eine besonders günstige Verteilung der Primärluft und damit eine günstige Mischung mit dem Brennstoff erreicht. Besonders zweckmässig ist es hiebei, wenn in Weiterbildung dieser Einrichtung, die Lanze mit Ausblaseöffnungen in zwei vom Stiel abstehenden Seitenarmen und im Stiel, oberhalb der Seitenarme versehen ist. Hiedurch gelingt es, Biomasse gegen die Stäbe des Korbes zu schleudern, wo sie haften und genügend Zeit zu einer möglichst vollständigen Verbrennung finden.

Es kann vorgesehen sein, dass die mit Ausblaseöffnungen für die Primärluft versehenen Arme der Lanze im Bereich des unteren Endes des die Wand des Brennraumes bildenden Rostes aus Stäben angeordnet sind.

Die im Brennraum in flüssigem Zustand anfallende Asche kann über Kanäle einem Aschentrog zugeleitet werden, wobei diese Kanäle die Zwischenräume zwischen den sternförmig angeordneten Zylindern für die Zufuhr der Biomasse zum Brennraum durchsetzen.

Um die in der Asche vorhandene Wärme auszunutzen, kann in besonderer Ausgestaltung der erfindungsgemässen Einrichtung vorgesehen sein, dass die Seitenwände des Aschetroges mit Durchbrechungen versehen sind, über welche Luft aus dem Luftvorwärmer, bevorzugt regelbar, dem Aschetrog und über die Kanäle für die (in Form von Tropfen erfolgende) Ascheabfuhr dem Brennraum zuführbar sind. Die Abfuhrkanäle für die Asche dienen hiebei gleichzeitig der Weiterführung der im Aschetrog erwärmten Luft. Während die Asche in Form von Tropfen sich nach unten bewegt, steigt die in den Aschetrog eingeführte Luft nach oben und kommt hierbei in direkten Kontakt mit den Aschetröpfchen, wodurch eine besonders intensive Erwärmung der Luft erzielbar ist.

Eine besonders günstige Unterbringung des Sichters für die Abgase der Nachbrennkammer ergibt sich, wenn gemäss einer besonders bevorzugten Ausgestaltung der erfindungsgemässen Einrichtung dieser Sichter konzentrisch zur Nachbrennkammer im Kessel angeordnet ist und mit der Nachbrennkammer bodenseitig über einen Durchlass verbunden ist, mit dem, insbesondere über Öffnungen im Kesselboden, eine Ringkammer in Verbindung steht, die, bevorzugt regelbar, mit Luft aus dem Luftvorwärmer versorgbar ist.

Eine weitere Ausgestaltung der erfindungsgemässen Einrichtung ist dadurch gekennzeichnet, dass der Sichter für die Abgase der Nachbrennkammer zwei längs einer Wandung aneinander schliessende Züge aufweist, von welchen einer über den Durchlass mit der Nachbrennkammer verbunden ist, während der zweite Zug an den Einlass des Gebläses für die Förderung der Primärluft angeschlossen ist, wobei im ersten Zug gegebenenfalls Leitflächen zur Erzielung eines Dralles der Abgase angeordnet sind. Durch die Anordnung zweier Züge kann eine besonders günstige Trennung der in den Abgasen vorhandenen Feststoffe erzielt werden, wobei diese Trennung noch dadurch verbessert werden kann, wenn man im ersten Zug Drallflächen einbaut.

In besonderer Ausgestaltung der erfindungsgemässen Einrichtung kann vorgesehen werden, dass der über den Durchlass mit der Nachbrennkammer verbundene Zug des Sichters in einen Raum mündet, der oberhalb des Brennraumes des Zufuhrschachtes für die Biomasse und der Nachbrennkammer im Kessel liegt und in dem ein Siebkorb, insbesondere koaxial zum Brennraum angeordnet ist, wobei die Wand zwischen den Zügen in Richtung auf den Mantel des Siebkorbes eingezogen ist und im Abstand des Siebkorbes zur Bildung eines Durchlasses zwischen den Zügen endet. Durch diese besondere Art der Anordnung des Zuges und des Raumes, in welchen der Zug mündet, ist es möglich, eine Aufheizung der Gase im Sichter zu erreichen und die Feststoffe von den Gasen abzuscheiden, einerseits durch Umlenkung der Gase beim Übergang vom ersten Zug in den zweiten Zug und andererseits durch den Siebkorb, der in raumsparender Weise koaxial zum Brennraum angeordnet ist.

In Weiterbildung der Erfindung kann oberhalb des Siebkorbes ein Saugzuggebläse angeordnet sein, dessen Einlasskanal mit dem Innenraum des Siebkorbes in Verbindung steht und dessen Schaufeln in einem Raum des Sichters umlaufen, wobei dieser Raum mit dem Abgasabzug (Kamin bzw. Schlot) in Verbindung steht. Diese Ausgestaltung der erfindungsgemässen Einrichtung erlaubt einerseits eine wirksame Abscheidung des Gasanteiles von den Feststoffen, dadurch, dass der Ventilator den gasförmigen Anteil durch das Sieb saugt und andererseits gleichzeitig die Abfuhr des gasförmigen Anteiles durch einen Abzugskanal, z.B. einen Schornstein, Kamin oder dgl.

Zur Ausnutzung der vorhandenen bzw. in der Einrichtung anfallenden Wärme ist es von Vorteil, wenn in besonderer Ausgestaltung der Erfindung, der Sichter sowohl deckseitig als auch seitlich von einer Glocke umschlossen ist, wobei dem Raum zwischen der Glocke und dem Sichter Frischluft, bevorzugt über eine koaxial zum Brennraum angeordnete Öffnung der Glocke zuführbar ist und der Innenraum der Glocke an den Einlass des Gebläses zur Förderung der Primärluft, bevorzugt über ein Regelorgan, angeschlossen ist. Gleichzeitig wird hiedurch eine günstige Isolierung des Kessels erreicht, wobei das Isoliermittel, nämlich Luft, noch der Verbrennung zugeführt werden kann. Auf diese Art gelingt es, auch die in den Aussenwandungen der erfindungsgemässen Einrichtung noch vorhandene Wärme zur Erwärmung von Primärluft zu nutzen.

Eine günstige Zufuhr der Biomasse ergibt sich, wenn in besonderer Ausgestaltung der Erfindung, der mit der Biomasse beaufschlagbare Sichter einen Filterkorb aufweist, dessen Innenraum über eine im für Luft durchlässigen Mantel des Filterkorbes befindliche Öffnung, die Biomasse samt (Förder)-luft zuführbar ist, wobei der Auslass für die Biomasse als Kreisring ausgebildet ist, der in den Schacht für die Zufuhr der Biomasse zum Brennraum führt, und wenn im Innenraum des Filterkorbes ein mit einem Drehantrieb ausgestatteter, insbesondere zweiarmiger Verteilerflügel umläuft. Der Innenraum des Filterkorbes muss hiebei unten, nämlich an der dem Schacht zugewandten Seite, bis zum Verteilerflügel gefüllt sein. Dadurch wird sichergestellt, dass die Abgase des Brennraumes die Biomasse, die aus dem Filterkorb kommt, quer durchsetzen und nicht einen Weg durch den Filterkorb nach oben nehmen. Die im Filterkorb vorhandene Biomasse wirkt damit praktisch als ein Verschluss, der hindert, dass die Abgase aus dem Brennraum nach oben entweichen. Der Widerstand am Verteilerflügel ist hierbei ein Mass für die Füllung des Korbes, so dass auf diesem Weg die Menge der zugeführten Biomasse gesteuert werden kann.

Es ist für die Verteilung der Biomasse von Vorteil, wenn der Verteilerflügel zumindest im Bereich seiner freien Enden gekrümmt ist und gegebenenfalls dort eine Breite aufweist, die etwas geringer als die Breite des in den Schacht für die Biomasse führenden Kreisringes ist.

Eine weitgehende Ausnutzung der für die Förderung der Biomasse erforderlichen Luft kann erfolgen, wenn in besonderer Ausgestaltung der erfindungsgemässen Einrichtung ein Teil der durch den Mantel des Filterkorbes hindurchtretenden, von der Biomasse abgetrennten Luft über eine Leitung, in die gegebenenfalls ein Durchflussregelorgan, z.B. eine Klappe, eingebaut ist, dem Luftvorwärmer zuführbar ist, wogegen der Rest der durch den Mantel des Filterkorbes seitlich austretenden Luft, der Nachbrennkammer zuführbar ist, die oben in einen den Filterkorb umschliessenden Ringraum mündet.

Die Erfindung wird nachstehend anhand der Zeichnungen näher erläutert. Es zeigen:

Fig. 1 ein Blockschaltbild der erfindungsgemässen Einrichtung zur Verfeuerung von Biomasse,

Fig. 2 ein Ausführungsbeispiel eines Kessels, enthaltend eine erfindungsgemässe Einrichtung zur Verfeuerung von Biomasse im Längsschnitt,

Fig. 3 einen Schnitt entlang der Linie A–B in Fig. 1,

Fig. 4 einen Schnitt entlang der Linie C–D in Fig. 1,

Fig. 5 einen Schnitt entlang der Linie E–F in Fig. 1,

Fig. 6 einen Schnitt entlang der Linie G–H in Fig. 1, und

Fig. 7 einen Längsschnitt durch einen Kessel in gegenüber Fig. 1 abgeänderter Ausführung.

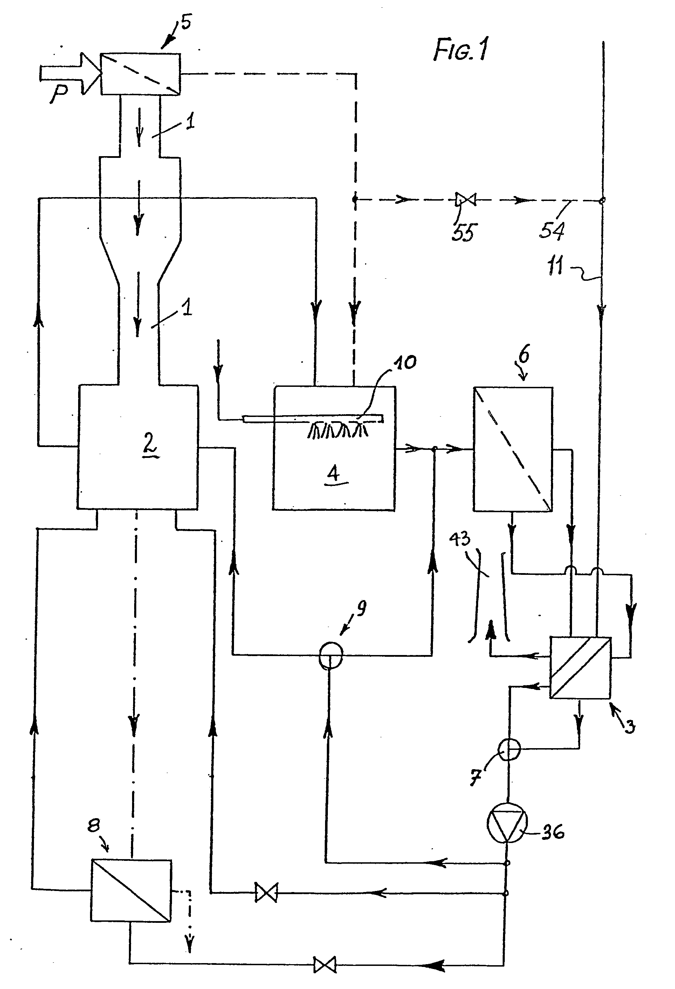

Mit der erfindungsgemässen Einrichtung wird Biomasse, z.B. Stroh, Weinreben oder dgl., verfeuert. Im Blockschaltbild gemäss Fig. 1 erfolgt die Zufuhr der Biomasse mit Luft in Richtung des Pfeiles P. Nach Durchgang durch einen Sichter 5, in dem Luft abgeschieden wird, gelangt die Biomasse über einen Schacht 1 in einen Brennraum 2. Der Brennraum 2 wird mit Primärluft versorgt, die in einem Luftvorwärmer 3 erwärmt wird. Abgase aus dem Brennraum 2 werden in den Schacht 1 eingeführt, wo sie die ankommende Biomasse durchsetzen und dabei erhitzen, die Feuchtigkeit vermindern und somit den Anteil an Kohlenstoff pro Masseneinheit erhöhen. Die Abgase aus dem Brennraum 2 werden nach Durchsetzen der Biomasse im Schacht 1, wo auch eine Vorreinigung der Abgase erfolgt, da die Biomasse ähnlich wie ein Filter wirkt, einer Nachbrennkammer 4 zugeführt. Dieser Nachbrennkammer 4 wird Luft aus dem Sichter 5 für die ankommende Biomasse zugeführt. Die Abgase der Nachbrennkammer 4 können einem weiteren Sichter 6 zugeführt werden und nach Durchtritt durch denselben in den Luftvorwärmer 3 für die Primärluft des Brennraumes 2 eingeleitet werden. Die im Sichter 6 abgeschiedenen Teile aus den Abgasen der Nachbrennkammer 4 können ebenfalls dem Luftvorwärmer 3 zugeführt werden, wo sie ihre Restwärme an die zu erhitzende Primärluft abgeben. Nach Passieren des Luftvorwärmers 3 können die Feststoffe der den Luftvorwärmer 3 verlassenden Primärluft für den Brennraum, bevorzugt über ein Dreiwegventil 7, eine Klappe oder dgl. zugeführt werden.

Die Asche wird aus dem Brennraum 2 in flüssigem Zustand abgezogen. Um die Wärme, die in der Schlacke enthalten ist, noch zu nutzen, ist ein Wärmetauscher 8 vorgesehen, der in den zum Brennraum 2 führenden Weg der im Luftvorwärmer 3 erhitzten Luft eingeschaltet ist. Die im Luftvorwärmer 3 erhitzte Luft, insbesondere ein Teilstrom derselben, kann über ein Mehrwegventil 9, eine Klappe oder dgl. entweder dem Brennraum 2 oder dem Abgas, das die Nachbrennkammer verlässt, zugemischt werden, und zwar vor dem Sichter 6 für die Abgase aus der Nachbrennkammer 4. Es ist auch möglich, mittels des Mehrwegventils 9 bzw. einer Klappe, die im Luftvorwärmer 3 erhitzte Luft sowohl dem Brennraum 2 als auch dem Abgas, das die Nachbrennkammer 4 verlässt, vor dem Sichter 6 zuzuführen. In die Nachbrennkammer 4 kann Wasser eingespritzt werden, z.B. mittels einer Brause 10. Ein Teilstrom der aus dem Sichter 5 für die ankommende Biomasse stammenden und zur Nachbrennkammer 4 geführten Luft kann in den zum Luftvorwärmer

3 führenden Weg 11 der Primärluft eingeführt werden. In der Abzweigleitung 54 kann hiezu ein Regelorgan 55 eingebaut werden.

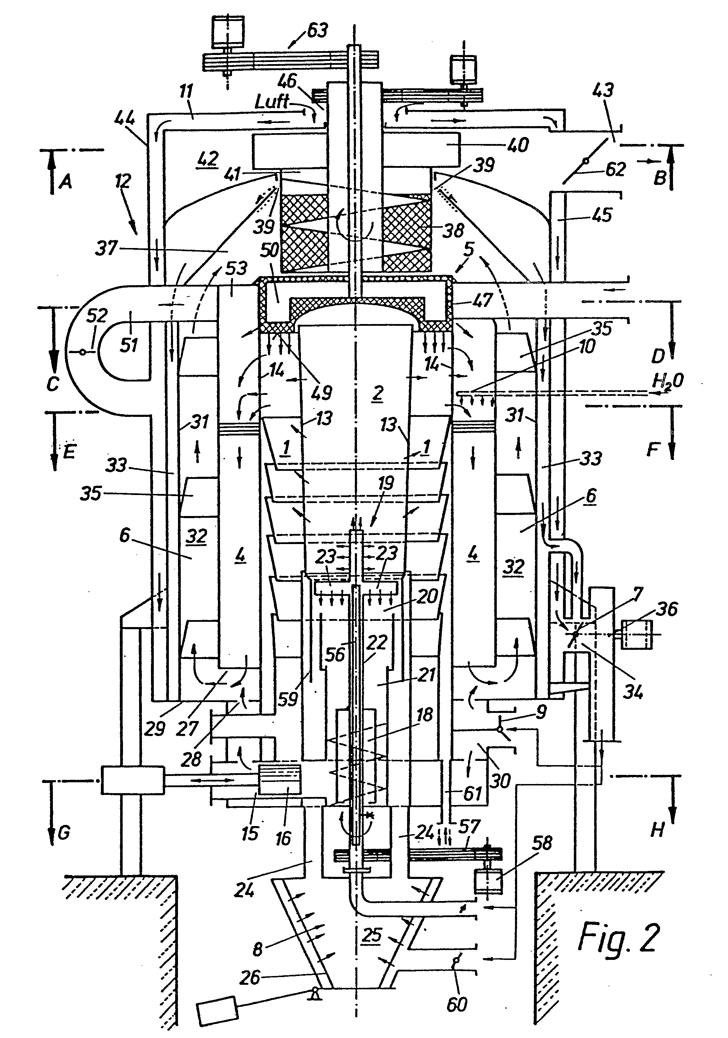

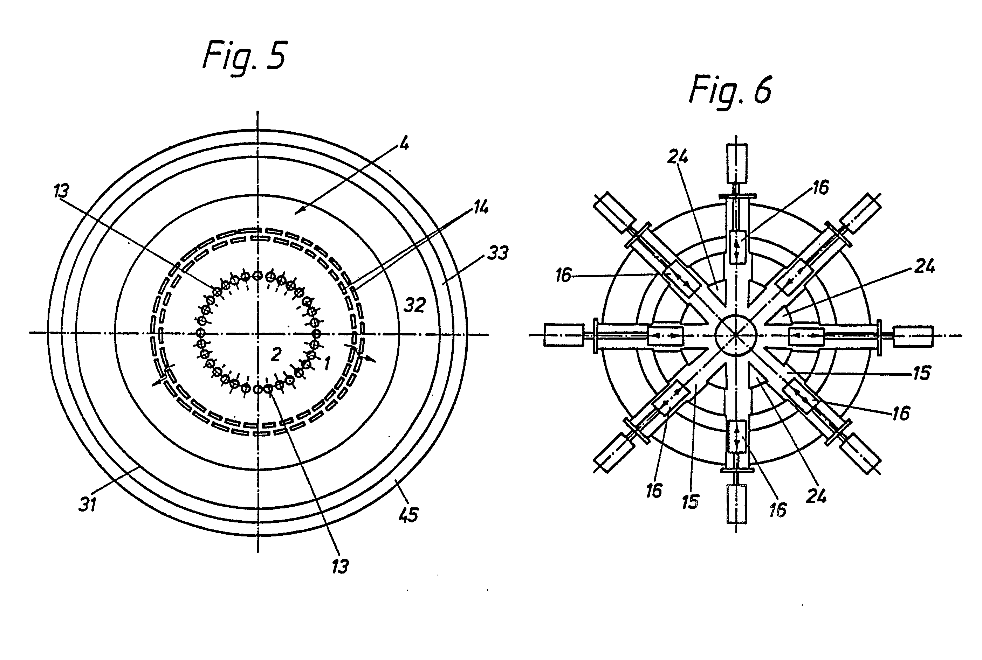

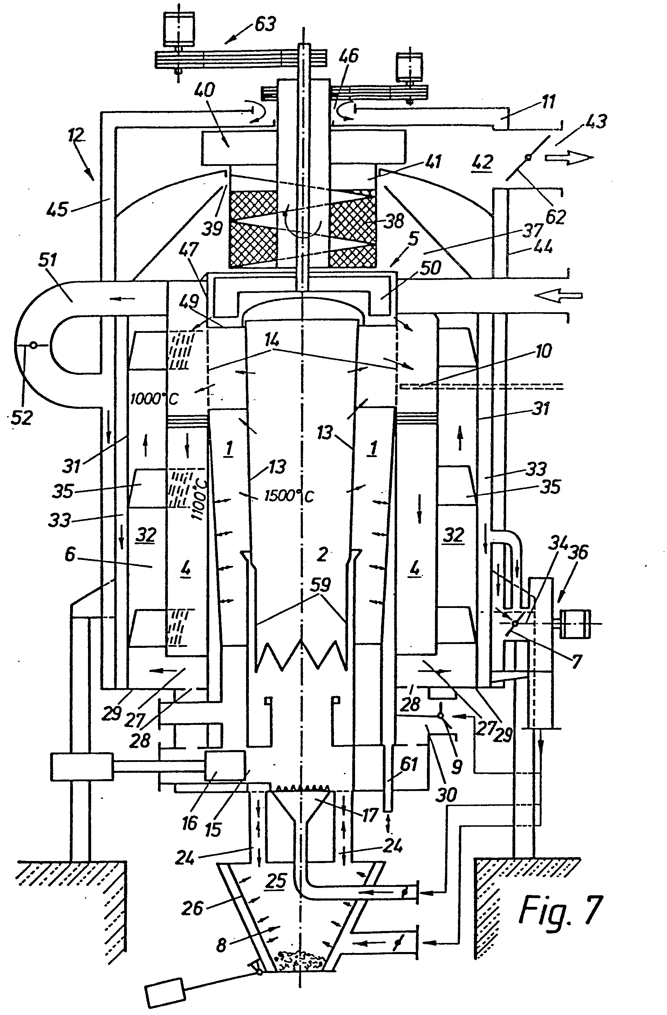

Gemäss den Fig. 2 und 7 sind Brennraum 2 und Nachbrennkammer 4 konzentrisch zueinander in einen als Ganzes mit 12 bezeichneten Kessel eingebaut. Der Kessel ist bevorzugt als Stehkessel ausgebildet. Der Zufuhrschacht 1 für die Biomasse umschliesst den Brennraum 2 konzentrisch. Der Zufuhrschacht 1 für die Biomasse ist von einem zwischen Brennraum 1 und Nachbrennkammer 4 befindlichen, konzentrisch zum Brennraum 1 liegenden Ringraum gebildet. Die Wandung zwischen dem Brennraum 1 und dem Zufuhrschacht 1 für die Biomasse zum Brennraum besitzt nach Art eines Rostes angeordnete Stäbe 13 (Fig. 5) aus feuerfestem Material. Die Stäbe 13 liegen hiebei bevorzugt Mann an Mann, wobei jedoch Gas zwischen den Stäben noch entweichen kann, da selbst durch die Mann an Mann liegenden Stäbe kein vollständig dichter Abschluss des Brennraumes 2 gegenüber dem Schacht 1 für die ankommende Biomasse erzielbar ist. Diese Anordnung der Stäbe 13 erlaubt es, dass aus dem Brennraum heisse Gase in den Schacht 1 für die Biomasse übertreten und diese Biomasse trocknen und aufheizen und dadurch der Kohlenstoffgehalt in der Biomasse, bezogen auf die Masseneinheit, erhöht wird. Gleichzeitig bewirkt die Biomasse, die sich im Schacht 1 nach unten bewegt, eine Filterung der Abgase aus dem Brennraum 2. Im oberen Bereich des Zufuhrschachtes 1 ist die Wandung zwischen dem Zufuhrschacht 1 für die Biomasse und der Nachbrennkammer 4 als Korb aus Stäben 14 ausgebildet, so dass aus dem Schacht 1 Gas in die Nachbrennkammer 4 übertreten kann (Fig. 5). Der die Wandung zwischen dem Zufuhrschacht 1 für die Biomasse und der Nachbrennkammer 4 bildende Korb weist zwei konzentrisch zueinander angeordnete Mäntel aus den umfänglich voneinander beabstandeten Stäben 14 auf, wobei die Stäbe der beiden Mäntel fug auf voll angeordnet sind. Der Zufuhrschacht 1 für die Biomasse mündet im Bereich seines unteren Endes in die Seitenwandung von Zylinderräumen 15, die – wie aus Fig. 6 ersichtlich ist – sternförmig um die Längsachse des Brennraumes 2 angeordnet sind.

In den Zylinderräumen 15 sind Förderkolben 16 hin- und herbewegbar. Die Zylinderräume 15 münden stirnseitig in den Brennraum 2.

Wie Fig. 7 zeigt, ist ein Düsenstock 17 im Brennraum 2 unterhalb der Einmündung der Zylinderräume 15 angeordnet. Der Düsenstock 17 wird mit Primärluft aus dem Luftvorwärmer 3 beaufschlagt. Die Primärluft ist hiebei mittels eines Gebläses 36 und regelbar dem Düsenstock 17 zuführbar. Gemäss Fig. 2 ist im Brennraum 2 ein umlaufender Schneckenförderer 18 im Bereich der Mündung der Zylinderräume 15, über welche die Biomasse zuführbar ist, angeordnet. Zur Zufuhr von Primärluft in den Brennraum 2 ist in diesem Falle eine mit dem Schneckenförderer 18 verbundene, also mit diesem umlaufende Lanze 19, vorgesehen, deren Ausblaseöffnungen oberhalb der Mündung 20 eines den Schneckenförderer 18 umschliessenden Förderschachtes 21 angeordnet sind. Durch den Umlauf der Lanze 19 gelingt eine besonders günstige Luftzufuhr in den Brennraum 2, die eine gute Durchmischung mit der dem Brennraum 2 zugeführten Biomasse sicherstellt.

Die Lanze 19 besitzt zwei von ihrem Stiel 22 abstehende Seitenarme 23, die ebenfalls Ausblaseöffnungen für Primärluft besitzen. Weiters besitzt die Lanze 19 im Mantel des Stieles oberhalb der Seitenarme 23 ebenfalls Ausblasöffnungen. Die Anordnung der Lanze 19 erfolgt derart, dass ihre Arme 23 im Bereich des unteren Endes des die Wand des Brennraumes 2 bildenden Rostes aus Stäben 13 angeordnet sind. In dem Lanzenstiel 22 ist ein Stab 56 verschiebbar und feststellbar gelagert, dessen Ende im Bereich der Abzweigung der Seitenarme 23 vom Stiel 22 der Lanze 19 liegt. Je nachdem welche Höhenlage die Stirnfläche des Stabes 56 einnimmt, wird mehr oder weniger Primärluft, die dem Stiel 22 zentral zugeführt wird, in den die Ausblaseöffnungen aufweisenden Abschnitt der Lanze 22 zugeführt. Der Antrieb der Lanze 19 und des Schneckenförderers 18 erfolgt über einen Riementrieb 57 durch einen E-Motor 58. Zur Austragung der im Trennraum 2 in flüssigem Zustand anfallenden Asche sind Kanäle 24 vorgesehen, die zu einem Aschetrog 25 führen und welche die Zwischenräume zwischen den stirnförmig angeordneten Zylindern für die Zufuhr der Biomasse zum Brennraum 2 durchsetzen. Zur Führung der flüssigen Asche können Bleche 59 im Brennraum 2 vorgesehen sein. Die Seitenwände 26 des Aschetroges 25 sind mit Durchbrechungen versehen, über welche Luft aus dem Luftvorwärmer 3 bevorzugt regelbar (z.B. mittels einer Klappe 60) dem Aschetrog 25 zuführbar ist, die dann nach Aufheizung durch die flüssig aus dem Brennraum 2 kommende Asche über die Kanäle 24 dem Brennraum 2 zuführbar ist.

Aus dem Zufuhrschacht 1 für die Biomasse kann über eine Leitung 61 Gas abgezogen und etwa zum Antrieb von Gasmotoren eingesetzt werden. Auch ist es möglich, über die Leitung 61 zusätzlich Luft, etwa über das Gebläse, der Biomasse zuzuführen.

Der Sichter 6 für die Abgase der Nachbrennkammer 4 ist, wie dies die Fig. 2 und 7 erkennen lassen, konzentrisch zur Nachbrennkammer 4 in den Kessel 12 eingebaut. Der Sichter ist bodenseitig über einen Durchlass 27 mit der Nachbrennkammer 4 verbunden. Der Durchlass 27 steht hiebei über Öffnungen 28 im Kesselboden 29 mit einer Ringkammer 30, die mit Luft aus dem Luftvorwärmer 3 versorgt wird, die mittels des Gebläses 36 gefördert wird, in Verbindung. Zur Regulierung der Luftzufuhr in die Ringkammer 30 kann ein Mehrwegventil 9 vorgesehen sein.

Der Sichter 6 für die Abgase der Nachbrennkammer 4 ist mit zwei Zügen 32, 33 versehen, die längs einer Wandung 31 aneinanderschliessen. Der Zug 32 ist hiebei über den Durchlass 27 mit der Nachbrennkammer 4 verbunden. Der zweite Zug 33 ist an den Einlass 34 des Gebläses 36 für die Förderung der Primärluft saugseitig angeschlossen. Im Zug 32 können Leitflächen 35 zur Erzielung eines Dralles der Abgase, geneigt zur Längserstreckung des Zuges 32, angeordnet sein.

Der Zug 32, der über den Durchlass 27 mit der Nachbrennkammer 4 verbunden ist, mündet oben in einen Raum 37, der oberhalb des Brennraumes 2 sowie des Zufuhrschachtes 1 für die Biomasse und der Nachbrennkammer 4 im Kessel 12 angeordnet ist. In dem Raum 37 ist ein Siebkorb 38 koaxial zum Brennraum angeordnet. Die Wand 31 zwischen den Zügen 32, 33 ist oben in Richtung auf den Mantel des Siebkorbes 38 eingezogen und endet im Abstand vom Siebkorb 38, wodurch ein Durchlass 39 zwischen den Zügen 32 und 33 gebildet wird. Oberhalb des Siebkorbes 38 ist ein Saugzuggebläse 40 angeordnet. Der Einlasskanal 41 des Gebläses 40 ist mit dem Innenraum des Siebkorbes 38 verbunden. Die Schaufeln des Gebläses 40 laufen in einem Raum 42 des Sichters um, der mit dem Abgasabzug 43 verbunden ist. Der Durchtrittsquerschnitt für die Abgase in den Abgasabzug 43 kann durch eine Klappe 62 reguliert werden.

Der Sichter 6 ist sowohl deckseitig als auch seitlich von einer Glocke 44 umschlossen, wobei zwischen Glocke und Sichter ein Raum 45 verbleibt, in den Frischluft über eine koaxial zum Brennraum 2 angeordnete Öffnung 46 mit dem Aussenraum zum Ansaugen von Frischluft zuführbar ist.

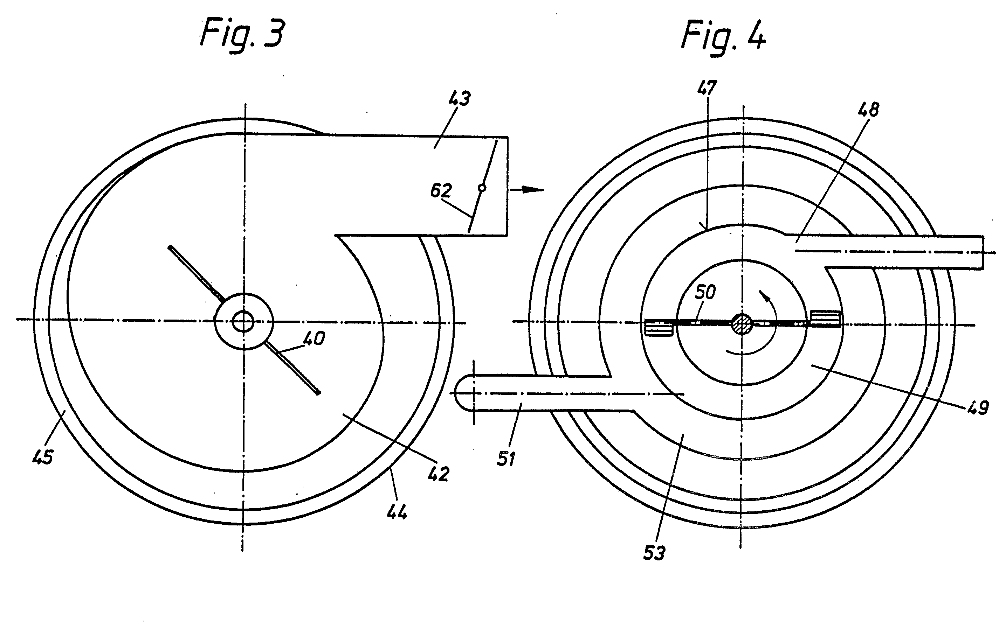

Der Innenraum 45 der Glocke ist an den Einlass 34 des Gebläses 36 angeschlossen, das über die Öffnung 46 der Glocke 44 Primärluft in den Raum 45 ansaugt. Der mit der Biomasse beaufschlagbare Sichter 5 weist einen Filterkorb 47 auf. Die Biomasse ist hiebei dem Innenraum des Filterkorbes 47 über eine Öffnung 48 im Mantel des Filterkorbes 47 zuführbar. Der Auslass 49 für die Biomasse ist als Kreisring ausgebildet, der in den Schacht 1 für die Zufuhr der Biomasse zum Brennraum 2 führt. Im Innenraum des Filterkorbes läuft ein mit einem Drehantrieb 63 ausgestatteter Verteilerflügel 50 (Fig. 4) um. Der Verteilerflügel 50 ist zumindest im Bereich seiner freien Enden gekrümmt und besitzt dort eine Breite, die etwas geringer als die Breite des in den Schacht 1 für die Biomasse führenden Kreisringes 49 ist. Ein Teil der durch den Mantel des Filterkorbes 47 für die Biomasse hindurchtretenden, von der Biomasse abgetrennten Luft ist über eine Leitung 51, in die gegebenenfalls ein Regelorgan, z.B. eine Klappe 52, eingebaut ist, dem Luftvorwärmer 3 zuführbar. Im dargestellten Ausführungsbeispiel mündet die Leitung 51 in den Aussenmantel der Glocke 44. Der Rest der durch den Mantel des Filterkorbes 47 seitlich austretenden Luft ist der Nachbrennkammer 4 zuführbar, die oben in einen den Filterkorb umschliessenden Ringraum 53 mündet.

**Patentansprüche**

1. Einrichtung zur Verfeuerung von Biomasse, z.B. Stroh, Weinreben u.dgl., in der die Biomasse über einen Schacht (1) einem Brennraum (2) zuführbar ist, der mit Primärluft versorgt ist und die Abgase des Brennraumes (2) in den Schacht (1) einführbar sind, dadurch gekennzeichnet, dass die Abgase des Brennraumes (2) aus diesem Schacht (1) einer Nachbrennkammer (4) zuführbar sind, wobei dieser Nachbrennkammer (4) Luft aus einem Sichter (5) zuführbar ist, der mit der mit Luft vermengten Biomasse beaufschlagbar ist und der an den zum Brennraum (2) führenden Schacht (1) angeschlossen ist und dass die Primärluft insbesondere in einem Luftvorwärmer (3) erwärmt wird.

2. Einrichtung nach Anspruch 1, dadurch gekennzeichnet, dass die Abgase der Nachbrennkammer (4), gegebenenfalls nach Durchgang durch einen Sichter (6), einem Luftvorwärmer (3) für die Primärluft des Brennraumes (2) zuführbar ist.

3. Einrichtung nach Anspruch 2, dadurch gekennzeichnet, dass der Luftvorwärmer (3) für die Primärluft mit jenem für die Abfuhr der mit einem Teil des Abgases der Nachbrennkammer (4) noch vermischten Festteile bestimmten Auslass des Sichters (6) für die Abgase der Nachbrennkammer (4) verbunden ist.

4. Einrichtung nach Anspruch 3, dadurch gekennzeichnet, dass die im Luftvorwärmer (3) anfallenden Feststoffe aus den Abgasen der Nachbrennkammer (4), der den Luftvorwärmer (3) verlassenden Primärluft für den Brennraum, bevorzugt über ein in die Primärluftleitung eingebautes Dreiwegventil (7), eine Klappe oder dgl. zuführbar sind.

5. Einrichtung nach einem der Ansprüche 2–4, dadurch gekennzeichnet, dass zur Nutzung der in der, insbesondere flüssig aus dem Brennraum (2) abgezogenen Schlacke enthaltenen Wärme ein Wärmetauscher (8) vorgesehen ist, der in den zum Brennraum (2) führenden Weg der im Luftvorwärmer (3) erhitzten Luft, bevorzugt in einem Teilstrom der im Luftvorwärmer (3) erhitzten Luft eingeschaltet ist.

6. Einrichtung nach einem der Ansprüche 2–5, dadurch gekennzeichnet, dass die im Luftvorwärmer (3) erhitzte Luft, insbesondere ein Teilstrom dieser Luft, über ein Regelorgan, z.B. ein Mehrwegventil (9), eine Klappe oder dgl. dem Brennraum (2) und bzw. oder dem Abgas der Nachbrennkammer (4) vor dem Sichter (6) für diese Abgase zuführbar ist.

7. Einrichtung nach einem der Ansprüche 1–6, dadurch gekennzeichnet, dass in die Nachbrennkammer (4), z.B. mittels einer Brause (10) oder dgl., Wasser einführbar ist.

8. Einrichtung nach einem der Ansprüche 2–6, dadurch gekennzeichnet, dass ein Teilstrom der Luft aus dem Sichter (5) für die Biomasse, in den zum Luftvorwärmer (3) führenden Weg (11) der Primärluft einmündet.

9. Einrichtung nach einem der Ansprüche 1–8, dadurch gekennzeichnet, dass der Brennraum (2) und die Nachbrennkammer (4) konzentrisch zueinander in einem bevorzugt als Stehkessel ausgebildeten Kessel (12) angeordnet sind und der Zufuhrschacht (1) für die Biomasse den Brennraum (2) konzentrisch umschliesst, wobei der Zufuhrschacht (1) für die Biomasse von einem zwischen Brennraum (1) und Nachbrennkammer (4) befindlichen Ringraum konzentrisch zum Brennraum (1) gebildet ist.

10. Einrichtung nach Anspruch 9, dadurch gekennzeichnet, dass die Wandung zwischen dem Brennraum (2) und dem Zufuhrschacht (1) für die Biomasse nach Art eines Rostes angeordnet, insbesondere Mann an Mann liegende Stäbe (13) aus feuerfestem Material, z.B. aus Oxidkeramik, aufweist.

11. Einrichtung nach Anspruch 10 oder 11, dadurch gekennzeichnet, dass die Wandung zwischen dem Zufuhrschacht (1) für die Biomasse und der Nachbrennkammer (4) im oberen Bereich als aus Stäben (14) gebildeter Korb ausgebildet ist.

12. Einrichtung nach Anspruch 11, dadurch gekennzeichnet, dass der die Wandung zwischen dem Zufuhrschacht (1) für die Biomasse und der Nachbrennkammer (4) bildende Korb zwei konzentrisch zueinander angeordnete Mäntel aus den umfänglich voneinander beabstandeten Stäben (14) aufweist, wobei die Stäbe der beiden Mäntel «Fug auf Voll» angeordnet sind.

13. Einrichtung nach einem der Ansprüche 9–12, dadurch gekennzeichnet, dass der Zufuhrschacht (1) für die Biomasse unten in Zylinderräume (15) seitlich einmündet, die sternförmig im Bereich des unteren Endes des Brennraumes (2) angeordnet sind und in welchen Förderkolben (16) bewegbar sind, wobei die Zylinderräume (16) stirnseitig in den Brennraum (2) münden.

14. Einrichtung nach Anspruch 13, dadurch gekennzeichnet, dass im Brennraum (2) unterhalb der Einmündung der Zylinderräume (15), über welche die Biomasse dem Brennraum (2) zuführbar ist, ein Düsenstock (17) angeordnet ist, der mit Primärluft aus dem Luftvorwärmer beaufschlagt ist, die insbesondere mittels eines Gebläses (36) und regelbar dem Düsenstock (17) zuführbar ist.

15. Einrichtung nach Anspruch 13, dadurch gekennzeichnet, dass in dem Brennraum (2), im Bereich der Mündung der Zylinderräume (15), über welche die Biomasse zuführbar ist, ein umlaufender Schneckenförderer (18) angeordnet ist und dass zur Zufuhr von Primärluft in den Brennraum (2) eine, insbesondere mit dem Schneckenförderer (18) verbundene, mit diesem umlaufende Lanze (19) vorgesehen ist, deren Ausblaseöffnungen bevorzugt oberhalb der Mündung (20) eines den Schneckenförderer (18) umschliessenden Förderschachtes (21) angeordnet sind.

16. Einrichtung nach Anspruch 15, dadurch gekennzeichnet, dass die Lanze (19) mit Ausblaseöffnungen in zwei vom Stiel (22) abstehenden Seitenarmen (23) und im Stiel (22), oberhalb der Seitenarme (23) versehen ist.

17. Einrichtung nach Anspruch 10 und 16, dadurch gekennzeichnet, dass die mit Primärluft versehenen Arme (23) der Lanze (19) im Bereich des unteren Endes des die Wand des Brennraumes (2) bildenden Rostes aus Stäben (13) angeordnet sind.

18. Einrichtung nach Anspruch 13, dadurch gekennzeichnet, dass die Zwischenräume zwischen den sternförmig angeordneten Zylindern für die Zufuhr der Biomasse zum Brennraum (2) von Kanälen (24) für die Ascheabfuhr aus dem Brennraum (2) durchsetzt sind, die in einen Aschetrog (25) münden.

19. Einrichtung nach Anspruch 18, dadurch gekennzeichnet, dass die Seitenwände (26) des Aschetroges (25) mit Durchbrechungen versehen sind, über welche Luft aus dem Luftvorwärmer (3), bevorzugt regelbar, dem Aschetrog (25) und über die Kanäle (24) für die (in Tropfenform erfolgende) Ascheabfuhr, dem Brennraum (2) zuführbar sind.

20. Einrichtung nach Anspruch 2 und 9, dadurch gekennzeichnet, dass der Sichter (6) für die Abgase der Nachbrennkammer (4) konzentrisch zur Nachbrennkammer (4) im Kessel (12) angeordnet ist und mit der Nachbrennkammer (4) bodenseitig über einen Durchlass (27) verbunden ist, mit dem, insbesondere über Öffnungen (28) im Kesselboden (29), eine Ringkammer (30) in Verbindung steht, die, bevorzugt regelbar, mit Luft aus dem Luftvorwärmer (3) versorgbar ist.

21. Einrichtung nach Anspruch 20, dadurch gekennzeichnet, dass der Sichter (6) für die Abgase der Nachbrennkammer (4) zwei längs einer Wandung (31) aneinander schliessende Züge (32, 33) aufweist, von welchen einer über den Durchlass (27) mit der Nachbrennkammer (4) verbunden ist, während der zweite Zug (33) an den Einlass (34) des Gebläses (35) für die Förderung der Primärluft angeschlossen ist, wobei im ersten Zug (32) gegebenenfalls Leitflächen (35) zur Erzielung eines Dralles der Abgase angeordnet sind.

22. Einrichtung nach Anspruch 20 oder 21, dadurch gekennzeichnet, dass der über den Durchlass (27) mit der Nachbrennkammer (4) verbundene Zug (32) des Sichters (6) in einen Raum (37) mündet, der oberhalb des Brennraumes (2), des Zufuhrschachtes (1) für die Biomasse und der Nachbrennkammer (4) im Kessel (12) liegt und in dem ein Siebkorb (38), insbesondere koaxial zum Brennraum (2) angeordnet ist, wobei die Wand zwischen den Zügen (32, 33) in Richtung auf den Mantel des Siebkorbes (38) eingezogen ist und im Abstand des Siebkorbes (38) zur Bildung eines Durchlasses (39) zwischen den Zügen (32, 33) endet.

23. Einrichtung nach Anspruch 22, dadurch gekennzeichnet, dass oberhalb des Siebkorbes (38) ein Saugzuggebläse (40) angeordnet ist, dessen Einlasskanal (41) mit dem Innenraum des Siebkorbes (38) in Verbindung steht und dessen Schaufeln in einem Raum (42) des Sichters umlaufen, wobei dieser Raum mit dem Abgasabzug (Kamin bzw. Schlot) (43) in Verbindung steht.

24. Einrichtung nach einem der Ansprüche 20–23, dadurch gekennzeichnet, dass der Sichter (6) sowohl deckseitig als auch seitlich von einer Glocke (44) umschlossen ist, wobei dem Raum (45) zwischen der Glocke (44) und dem Sichter (6) Frischluft, bevorzugt über eine koaxial zum Brennraum (2) angeordnete Öffnung (46) der Glocke (44) zuführbar ist und der Innenraum der Glocke (44) an den Einlass (34) des Gebläses (36) zur Förderung der Primärluft, bevorzugt über ein Regelorgan (7), angeschlossen ist.

25. Einrichtung nach einem der Ansprüche 2–24, dadurch gekennzeichnet, dass der mit der Biomasse beaufschlagbare Sichter (5) einen Filterkorb (47) aufweist, dessen Innenraum über eine im für Luft durchlässigen Mantel des Filterkorbes (47) befindliche Öffnung (48) die Biomasse samt (Förder)-luft zuführbar ist, wobei der Auslass (49) für die Biomasse als Kreisring ausgebildet ist, der in den Schacht (1) für die Zufuhr der Biomasse zum Brennraum (2) führt und dass im Innenraum des Filterkorbes (47) ein mit einem Drehantrieb (63) ausgestatteter, insbesondere zweiarmiger Verteilerflügel (50) umläuft.

26. Einrichtung nach Anspruch 25, dadurch gekennzeichnet, dass der Verteilerflügel (50) zumindest im Bereich seiner freien Enden gekrümmt ist und gegebenenfalls dort eine Breite aufweist, die etwas geringer als die Breite des in den Schacht (1) für die Biomasse führenden Kreisringes (49) ist.

27. Einrichtung nach Anspruch 25 oder 26, dadurch gekennzeichnet, dass ein Teil der durch den Mantel des Filterkorbes (47) hindurchtretenden, von der Biomasse abgetrennten Luft über eine Leitung (51), in die gegebenenfalls ein Durchflussregelorgan, z.B. eine Klappe (52), eingebaut ist, dem Luftvorwärmer (3) zuführbar ist, wogegen der Rest der durch den Mantel des Filterkorbes (47) seitlich austretenden Luft, der Nachbrennkammer (4) zuführbar ist, die oben in einen den Filterkorb (47) umschliessenden Ringraum (53) mündet.

**Claims**

1. Apparatus for combusting biomass, such as straw, vines and the like, wherin the biomass is adapted to be fed through a shaft (1) to a combustion chamber (2), which is supplied with primary air, and the exhaust gases from the combustion chamber (2) are adapted to be supplied to the shaft (1), characterized in that the exhaust gases from the combustion chamber (2) are adapted to be delivered from said shaft (1) to an afterburning chamber (4), which is adapted to be supplied with air from a classifier (5), which is adapted to be supplied with the biomass that has been mixed with air, said classifier (5) is connected to the shaft (1) which leads to the combustion chamber (2) and the primary air is heated particularly in an air preheater (3).

2. Apparatus according to claim 1, characterized in that the exhaust gases from the afterburning chamber (4) are optionally passed through a classifier (6) and are adapted to be subsequently supplied to an air preheater (3) for the primary air for the combustion chamber (2).

3. Apparatus according to claim 2, characterized in that the air preheater (3) for the primary air communicates with the classifier (6) for the exhaust gases from the afterburning chamber (4) at that outlet thereof which is intended for a discharge of the solids which are still mingled with part of the exhaust gases from the afterburning chamber (4).

4. Apparatus according to claim 3, characterized in that the solids which are contained in the exhaust gases coming from the afterburning chamber (4) and which are present in the air preheater (3) are adapted to be supplied preferably via a three-way valve (7), a damper or the like incorporated in the primary air line, to the primary air which leaves the air preheater (3) and is to be supplied to the combustion chamber.

5. Apparatus according to any of claims 2 to 4, characterized in that a heat exchanger (8) is provided for the utilization of the heat which is contained in the slag that is withdrawn from the combustion chamber (2), particularly in a liquid state, said heat exchanger (8) being incorporated in the path for the air that has been heated in the air preheater (3) and is to be supplied to the combustion chamber (2) and said heat exchanger (8) being preferably incorporated in a partial stream of the air that has been heated in the air preheater (3).

6. Apparatus according to any of claims 2 to 5, characterized in that the air which has been heated in the air preheater (3), particularly a partial stream of said air, is adapted to be supplied through or past a control element, such as a multiway valve (9), a damper or the like, to the combustion chamber (2) and/or to the exhaust gas from the afterburning chamber (4) before the classifier (6).

7. Apparatus according to any of claims 1 to 6, characterized in that water is adapted to be introduced into the afterburning chamber (e.g.), e.g., by means of a sprinkler (10) or the like.

8. Apparatus according to any of claims 2 to 6, characterized in that a partial stream of the air from the classifier (5) for the biomass enters the path (11) for the primary air, which path leads to the air preheater (3).

9. Apparatus according to any of claims 1 to 8, characterized in that the combustion chamber (2) and the afterburning chamber (4) are concentric to each other and disposed in a boiler (12), preferably an upright boiler, and the shaft (1) for feeding the biomass concentrically surrounds the combustion chamber (2), said shaft being defined by an annular space which is disposed between the combustion chamber (2) and the afterburning chamber (4) and is concentric to the combustion chamber (2).

10. Apparatus according to claim 9, characterized in that the wall between the combustion chamber (2) and the shaft (1) for feeding the biomass comprises rods (13), which are made of refractory material, such as ceramic oxide, and arranged as in a grate and preferably in contact with each other.

11. Apparatus according to claim 9 or 10, characterized in that the wall between the shaft (1) for feeding the biomass and the afterburning chamber (4) consists in its upper portion of a basket that is formed by rods (14).

12. Apparatus according to claim 11, characterized in that the basket which constitutes the wall between the shaft (1) for feeding the biomass and the afterburning chamber (4) comprises two mutually concentric shells made of rods (14), which are peripherally spaced apart, and the rods of the two shells are staggered.

13. Apparatus according to any of claims 9 to 12, characterized in that the shaft (1) for feeding the biomass at its lower end laterally opens into cylindrical chambers (15), which are arranged in a starlike array adjacent to the lower end of the combustion chamber (2), and feeding pistons (16) are movable in said cylindrical chambers (15), which at their ends open into the combustion chamber (2).

14. Apparatus according to claim 13, characterized in that a nozzle head (17) is disposed in the combustion chamber (2) below the open ends of the cylinder chambers (15) through which the biomass is adapted to be fed to the combustion chamber (2), and said nozzle head is supplied with primary air which comes from the air preheater and is particularly adapted to be supplied to the nozzle head (17) by means of a fan (36) and particularly in a controllable manner.

15. Apparatus according to claim 13, characterized in that a rotary screw conveyor (18) is disposed in the combustion chamber (2) adjacent to the open ends of the cylinder chambers (15) through which the biomass is adapted to be fed, and a lance (19) is provided, which serves to supply primary air to combustion chamber (2) and particularly coupled with the screw conveyor (18) and rotates with the latter and has blow-out openings, which are preferably disposed above the mouth (20) of a conveyor shaft (21) which surrounds the screw conveyor (18).

16. Apparatus according to claim 15, characterized in that the lance (19) is provided with blow-out openings in two side arms (23), which protrude from the stem (22) and also with blow-out openings located in the stem (22) above the side arms (23).

17. Apparatus according to claims 10 and 16, characterized in that those arms (23) of the lance (19) which are supplied with primary air are disposed adjacent to the lower end of the grate of rods (13) which constitutes the wall of the combustion chamber (2).

18. Apparatus according to claim 13, characterized in that passages (24) for discharging ash from the combustion chamber (2) extend through the spaces between the cylinders arranged in a starlike array and serving to feed the biomass to the combustion chamber (2) and said passages open into an ash trough (25).

19. Apparatus according to claim 18, characterized in that the side walls (26) of the ash trough (25) are formed with apertures through which air from the air preheater (3) is adapted to be supplied to the ash trough (25), preferably in a controlled manner, and through the passages (24) for the discharge of ash (in droplets) to the combustion chamber (2).

20. Apparatus according to claims 2 and 9, characterized in that the classifier (6) for the exhaust gases from the afterburning chamber (4) is arranged concentric to the afterburning chamber (4) within the boiler (12), the classifier (6) communicates at its bottom with the afterburning chamber (4) via a passage (27), which communicates with an annular chamber (30), particularly through openings (26) in the bottom (29) of the boiler, and the annular chamber (30) is adapted to be supplied preferably in a controllable manner, with air from the air preheater (3).

21. Apparatus according to claim 20, characterized in that the classifier (6) for the exhaust gases from the afterburning chamber (4) comprises two flues (32, 33), which adjoin each other along a wall (31), one of said flues communicates with the afterburning chamber (4) through the passage (27), the second flue (33) is connected to the inlet (34) of the fan (36) for supplying the primary air, and guide vanes (35) for generating a vortex motion in the exhaust gases are optionally contained in the first flue (32).

22. Apparatus according to claim 20 or 21, characterized in that flue (32) of the classifier (6) which communicates through the passage (27) with the afterburning chamber (4) opens into a chamber (37) which is disposed in the boiler (12) above the combustion chamber (2), the shaft (1) for feeding the biomass, and the afterburning chamber (4) and contains a sieve basket (38), which is preferably coaxial to the combustion chamber (2), and the wall between the flues (32, 33) is reentrant towards the shell of the sieve basket (38) and terminates at a distance from the sieve basket (38) so as to define a passage (39) between the flues (32, 33).

23. Apparatus according to claim 22, characterized in that an exhaust fan (40) is disposed above the sieve basket (38) and comprises an inlet passage (41), which communicates with the interior of the sieve basket (38), and blades, which revolve in the classifier in a chamber (42) which communicates with the exhaust gas offtake (chimney or smokestack) (43).

24. Apparatus according to any of claims 20 to 23, characterized in that the classifier (6) is surrounded at its top and on its sides by a bell (44), fresh air is adapted to be supplied to the space (45) between the bell (44) and the classifier (6), preferably through an opening (46) that is formed in the bell (44) and is coaxial to the combustion chamber (2), and the interior of the bell (44) communicates, preferably through a control device (7), with the inlet (34) of the fan (36) for supplying the primary air.

25. Apparatus according to any of claims 2 to 24, characterized in that the classifier (5) which is adapted to be supplied with the biomass comprises a filter basket (47), the biomass together with the (entraining) air is adapted to be supplied to the interior of the filter basket (47) through an opening (48) formed in the airpermeable shell of the filter basket (47), the outlet (49) for the biomass consists of a circular ring, which leads into the shaft (1) for feeding the biomass to the combustion chamber (2), and the interior of the filter basket (47) contains a rotating distributor blade (50), which is provided with a rotary drive (63) and is particularly two-armed.

26. Apparatus according to claim 25, characterized in that the distributor blade (50) is curved at least adjacent to its curved ends and in that region optionally has a width which is slightly smaller than the width of the circular ring (49) which leads into the shaft (1) for the biomass.

27. Apparatus according to claim 25 or 26, characterized in that a part of the air which has flown through the shell of the filter basket (47) and has been separated from the biomass is adapted to be supplied to the air preheater (3) through a duct (51), which optionally incorporates a flow control device, such as a damper (52), and the remainder of the air which laterally flows through the shell of the filter basket (47) is adapted to be supplied to the afterburning chamber (4), which opens at its top into an annular space (53), which surrounds the filter basket (47).

## Revendications

1. Dispositif pour la combustion de biomasses telles que la paille, les ceps de vigne, etc. dans lequel la biomasse peut être introduite par un puits (1) dans une chambre de combustion (2) qui est alimentée en air primaire, et dans lequel les gaz d'échappement de la chambre de combustion (2) peuvent être introduits dans le puits (1), caractérisé en ce que les gaz d'échappement de la chambre de combustion (2) peuvent être dirigés à partir de ce puits (1) jusqu'à une chambre de post-combustion (4), cette chambre de post-combustion (4) pouvant être alimentée en air à partir d'un dépoussiéreur (5) qui peut être alimenté avec de la biomasse mélangée à de l'air, et qui est raccordé au puits (1) conduisant à la chambre de combustion (2) et en ce que l'air primaire est chauffé, notamment dans un réchauffeur d'air (3).

2. Dispositif selon la revendication 1, caractérisé en ce que les gaz d'échappement de la chambre de post-combustion (4) peuvent être amenés à un réchauffeur (3) de l'air primaire de la chambre de combustion (2), éventuellement après passage dans un dépoussiéreur (6).

3. Dispositif selon la revendication 2, caractérisé en ce que le réchauffeur (3) de l'air primaire est relié à la sortie du dépoussiéreur (6) des gaz d'échappement de la chambre de post-combustion (4) destinée à l'évacuation des particules solides encore mélangées à une partie des gaz d'échappement de la chambre de post-combustion (4).

4. Dispositif selon la revendication 3, caractérisé en ce que les particules solides produites dans le réchauffeur d'air (3) à partir des gaz d'échappement de la chambre de post-combustion (4) peuvent de préférence être conduites par une vanne à trois voies (7), un clapet ou similaire intégrés dans la conduite d'air primaire vers l'air primaire quittant le réchauffeur d'air (3) pour la chambre de combustion.

5. Dispositif selon l'une des revendications 2 à 4, caractérisé en ce qu'il est prévu, pour l'exploitation de la chaleur renfermée dans les résidus, specialement liquides, soutirés de la chambre de combustion (2), un échangeur thermique (8) qui est intercalé sur le trajet conduisant à la chambre de combustion (2) de l'air chauffé dans le réchauffeur (3), de préférence dans un courant partiel de l'air chauffé dans le réchauffeur (3).

6. Dispositif selon l'une des revendications 2 à 5, caractérisé en ce que l'air chauffé dans le réchauffeur (3), et spécialement un courant partiel de cet air, peut être conduit par un dispositif de réglage, par exemple une vanne à plusieurs voies (9), un clapet ou similaire, à la chambre de combustion (2) et/ou aux gaz d'échappement de la chambre de post-combustion (4) avant le dépoussiéreur (6) prévu pour ces gaz d'échappement.

7. Dispositif selon l'une des revendications 1 à 6, caractérisé en ce que l'on introduit de l'eau dans la chambre de post-combustion (4), par exemple au moyen d'une pomme d'arrosage (10) ou similaire.

8. Dispositif selon l'une des revendications 1 à 6, caractérisé en ce qu'un courant partiel d'air provenant du dépoussiéreur (5) de la biomasse débouche dans le trajet (11) d'air primaire conduisant au réchauffeur (3).

9. Dispositif selon l'une des revendications 1 à 8, caractérisé en ce que la chambre de combustion (2) et la chambre de post-combustion (4) sont disposées concentriquement l'une par rapport à l'autre dans une chaudière (12), de préférence une boîte à feu et le puits d'introduction (1) de la biomasse entoure concentriquement la chambre de combustion (2), le puits d'introduction (1) de la biomasse étant disposé concentriquement à la chambre de combustion (2) par un espace annulaire prévu entre la chambre de combustion (2) et la chambre de post-combustion (4).

10. Dispositif selon la revendication 9, caractérisé en ce que la paroi entre la chambre de combustion (2) et le puits d'introduction (1) de la biomasse se présente sous la forme d'une grille, et plus particulièrement sous forme de barreaux, disposés côte à côte, en matériau refractaire, par exemple en céramique oxyde.

11. Dispositif selon la revendication 10 ou la revendication 11, caractérisé en ce que la paroi entre le puits d'introduction (1) de la biomasse et la chambre de post-combustion (4) est conformée dans la zone supérieure comme un panier jà partier des barreaux (14).

12. Dispositif selon la revendication 11, caractérisé en ce que le panier formant la paroi entre le puits d'introduction (1) de la biomasse, et la chambre de post-combustion (4) comporte deux enveloppes disposées concentriquement l'une par rapport à l'autre, réalisées à partir des barreaux (14), espacées dans le sens de la circonférence, les barreaux des deux enveloppes étant disposés en quinconce.

13. Dispositif selon l'une des revendications 9 à 12, caractérisé en ce que le puits d'introduction (1) de la biomasse débouche latéralement, endessous dans les chambres cylindriques (15) qui sont disposées en étoile dans la zone d'extrémité inférieure de la chambre de combustion (2) et dans lesquelles des pistons d'alimentation (16) sont disposés mobiles, les chambres cylindriques (16) débouchant frontalement dans la chambre de combustion (2).

14. Dispositif selon la revendication 13, caractérisé en ce que dans la chambre de combustion (2), en dessous de l'ouverture des chambres cylindriques (15) par lesquelles on peut introduire la biomasse dans la chambre de combustion (2), est disposé un porte-vent (17) dans lequel on peut injecter l'air primaire provenant du réchauffeur d'air qui peut être amené au porte-vent (17) de façon réglable au moyen d'une soufflerie (36).

15. Dispositif selon la revendication 13, caractérisé en ce que dans la chambre de combustion (2) dans la zone de l'ouverture des chambres cylindriques (15) par laquelle on peut introduire la biomasse, est disposé un convoyeur à vis (18) rotatif et en ce qu'il est prévu, pour l'introduction de l'air primaire dans la chambre de combustion (2) une lance (19) reliée au convoyeur à vis (18), tournant avec celui-ci, et dont les bouches de sortie sont disposées de préférence au-dessus de l'ouverture (20) d'un puits d'alimentation (21) entourant le convoyeur à vis (18).

16. Dispositif selon la revendication 15, caractérisé en ce que la lance (19) est munie de bouches de sortie dans deux bras latéraux (23) éloignés du manche (22), ainsi que dans le manche (22) en amont des bras latéraux (23).

17. Dispositif selon la revendication 10 et la revendication 16, caractérisé en ce que les bras (23) de la lance (19) alimentés en air primaire sont disposés dans la zone de l'extrémité inférieure de la grille en barreaux (13) formant la paroi de la chambre de combustion (2).

18. Dispositif selon la revendication 13, caractérisé en ce que les espaces intermédiaires entre les cylindres disposés en étoile pour l'introduction de la biomasse à la chambre de combustion (2) sont traversés par des canaux (24), débouchant dans un cendrier (25), pour évacuer les cendres de la chambre de combustion (2).

19. Dispositif selon la revendication 18, caractérisé en ce que les parois latérales (26) du cendrier (25) sont munies d'ouvertures par lesquelles l'air venant du réchauffeur (3), de préférence de façon réglable, est susceptible d'être conduit jusqu'au cendrier (25) et, par les canaux (24) destinés à l'évacuation des cendres (sous forme de gouttes) jusqu'à la chambre de combustion (2).

20. Dispositif selon les revendications 2 et 9, caractérisé en ce que le dépoussiéreur (6) des gaz d'échappement de la chambre de post-combustion (4) est disposé concentriquement à la chambre de post-combustion (4) dans la chaudière et est relié du côté du fond à la chambre de post-combustion (4) par un passage (27), grâce auquel, spécialement par les ouvertures (26) ménagées dans le fond (29) de la chaudière, un espace annulaire est en relation, de préférence réglable, avec l'air provenant du réchauffeur (3).

21. Dispositif selon la revendication 20, caractérisé en ce que le dépoussiéreur (6) des gaz d'échappement de la chambre de post-combustion (4) comporte deux conduits (32, 33) se raccordant l'un à l'autre le long d'une paroi (31), l'un étant relié par le passage (27) à la chambre de post-combustion (4) tandis que le second conduit (33) est raccordé à l'orifice d'admission (34) de la soufflerie (35) d'alimentation en air primaire, des surfaces de guidage (35) étant éventuellement disposées pour communiquer aux gaz d'échappement un mouvement tourbillonnaire.

22. Dispositif selon la revendication 20 ou la revendication 21, caractérisé en ce que le conduit (32) du dépoussiéreur (6) relié par le passage (27) à la chambre de post-combustion (4) débouche dans un espace (37) qui se trouve dans la chaudière (12) au-dessus de la chambre de combustion (2), du puits d'introduction (1) de la biomasse et de la chambre de post-combustion (4) et dans lequel est disposé un panier perforé (38) coaxial à la chambre de combustion (2), la paroi entre les conduites (32, 33) en direction de l'enveloppe du panier perforé (38) étant retirée et se terminant à distance du panier perforé (38) pour ménager un passage (39) entre les conduits (32, 33).

23. Dispositif selon la revendication 22, caractérisé en ce qu'il est disposé, au-dessus du panier perforé (38) un dispositif d'aspiration (40) dont le canal d'admission (41) est en liaison avec l'intérieur du panier perforé (38) et dont les pales tournent dans un compartiment (42) du dépoussiéreur, ce qui met en relation ce compartiment avec l'évacuation (43) des gaz d'échappement (cheminée par exemple).

24. Dispositif selon l'une des revendications 20 à 23, caractérisé en ce que le dépoussiéreur est entouré aussi bien du côté couvercle que latéralement par une cloche (44), de l'air frais étant susceptible d'être introduit dans l'espace (45) entre la cloche (44) et le dépoussiéreur (6), de préférence par une ouverture (46) de la cloche (44) disposée coaxialement à la chambre de combustion (2) et l'espace intérieur de la cloche (44), étant raccordé à l'admission (34) de la soufflerie (36) pour fournir l'air primaire, de préférance par un organe de réglage (7).

25. Dispositif selon l'une des revendications 2 à 24, caractérisé en ce que le dépoussiéreur (5) dans lequel on peut introduire la biomasse comporte un panier filtrant (47), dans l'intérieur duquel peut être introduite la biomasse, y compris l'air, par une ouverture (48) ménagée dans l'enveloppe perméable à l'air du panier filtrant (47), l'ouverture d'évacuation (49) de la biomasse présentant la forme d'une couronne qui conduit dans le puits (1) prévu pour l'introduction de la biomasse dans la chambre de combustion (2) et en ce qu'une pale de distribution à deux bras (50) équipée d'un moteur (63) tourne à l'intérieur du panier filtrant (47).

26. Dispositif selon la revendication 25, caractérisé en ce que la pale de distribution (50) est cintrée jau moins dans la zone de ses extrémités libres et présente éventuellement une largeur qui est inférieure à la largeur de la couronne (49) conduisant à la biomasse dans le puits (1).

27. Dispositif selon la revendication 25 ou la revendication 26, caractérisé en ce qu'une partie de l'air séparé de la biomasse et traversant l'enveloppe du panier filtrant (47) est susceptible d'être amenée au réchauffeur d'air (3), dans lequel est éventuellement monté un organe de réglage de débit tel qu'un clapet (52), alors que le restant de l'air sortant latéralement par l'enveloppe du panier filtrant (47) est susceptible d'être amené à la chambre de post-combustion (4) qui débouche au-dessus dans une couronne (53) entourant le panier filtrant (47).

Fig.1

Fig. 2

Fig. 3

Fig. 4

0 149 990

Fig. 5

Fig. 6

0 149 990

Fig. 7